(19) Europäisches Patentamt
European Patent Office
Office européen des brevets

(11) Veröffentlichungsnummer: **0 043 800**
**A1**

(12) # EUROPÄISCHE PATENTANMELDUNG

(21) Anmeldenummer: **81810268.3**

(22) Anmeldetag: **01.07.81**

(51) Int. Cl.³: **A 01 N 47/22**, A 01 N 43/64 // (A01N47/22, 43/40), (A01N43/64, 43/40)

(30) Priorität: **07.07.80 CH 5193/80**

(43) Veröffentlichungstag der Anmeldung: **13.01.82 Patentblatt 82/2**

(84) Benannte Vertragsstaaten: **AT BE CH DE FR GB IT LI NL SE**

(71) Anmelder: **CIBA-GEIGY AG, Patentabteilung Postfach, CH-4002 Basel (CH)**

(72) Erfinder: **Quadranti, Marco, Dr., Promenade 24, CH-5200 Brugg (CH)**
Erfinder: **Maag, Kurt, Krebsenbachweg 18, CH-4148 Pfeffingen (CH)**

(54) **Synergistisches Mittel und Verfahren zur selektiven Unkrautbekämpfung, insbesondere in Zucker- und Futterrübenkulturen.**

(57) Mittel, welche als Wirkstoff einerseits einen 4-(3′,5′-Dichlor-pyridyl-2′-oxy)-α-phenoxy-propionsäurepropargylester der Formel

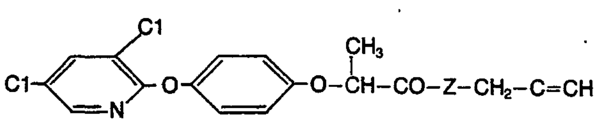

worin Z Sauerstoff oder Schwefel bedeutet, und andererseits 4-Amino-3-methyl-6-phenyl-[4H]-1,2,4-triazin-5-on oder Methyl-3-m-tolyl-carbamoyloxyphenylcarbamat in Mischung miteinander enthalten, zeigen in Zucker- und Futterrübenkulturen synergistische herbizide Wirkung.

EP 0 043 800 A1

0043800

CIBA-GEIGY AG
Basel (Schweiz)

5-12947/=

# Synergistisches Mittel und Verfahren zur selektiven Unkrautbekämpfung, insbesondere in Zucker- und Futterrübenkulturen.

Die vorliegende Erfindung betrifft ein synergistisches Mittel, welches eine herbizide Wirkstoffkombination enthält, die sich hervorragend eignet zur selektiven Unkrautbekämpfung, besonders in Zucker- und Futterrübenkulturen. Die Erfindung betrifft auch ein Verfahren zur Bekämpfung von Unkräutern, insbesondere in Zucker- und Futterrübenkulturen unter Verwendung des neuen Mittels.

Die zur Zeit häufigsten und wichtigsten Unkräuter in Zucker- und Futterrübenkulturen sind Spezies der Gattung Amaranthus (Fuchsschwanz), Chenopodium (Gänsefuss), Sinapis (Senf), Panicum (Hirse) und gewisse Avena-Arten (Wildhafer).

Als hervorragende postemergente Selektivherbizide gegen monokotyle Unkräuter haben sich 4-(3',5'-Dichlorpyridyl-2'-oxy)-α-phenoxypropionsäurepropargylester der Formel I

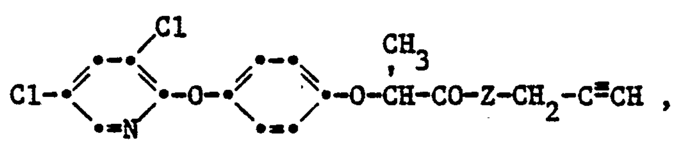 ,    (I)

worin Z Sauerstoff oder Schwefel bedeutet, erwiesen.

Die beiden Verbindungen der Formel I, nämlich 4-(3',5'-Dichlorpyridyl-2'-oxy)-α-phenoxypropionsäurepropargylester (Ia) und 4-(3',5'-Dichlorpyridyl-2'-oxy)-α-phenoxypropionthiolsäurepropargylester (Ib), ihre Herstellung und Verwendung als Selektivherbizide sind in der europäischen Patentpublikation Nr. 3114 beschrieben.

Dikotyle Unkräuter werden oft erfolgreich mit 4-Amino-3-methyl-6-phenyl[4H]-1,2,4-triazin-5-on (Metamitron) der Formel IIa

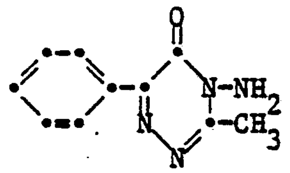

(IIa)

oder mit Methyl-3-m-tolylcarbamoyloxyphenylcarbamat (Phenmedipham) der Formel IIb

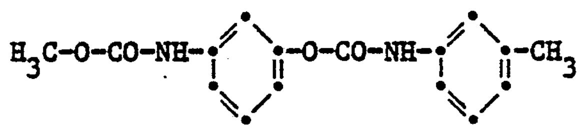

(IIb)

in postemergenter Anwendung bekämpft.

Metamitron und seine herbizide Wirksamkeit wurde beispielsweise beim 3rd. Int. Meeting of Selective Weed Control in Beet Crops, Paris, 1975, beschrieben.

Ueber Phenmedipham und seine herbiziden Eigenschaften wird beispielsweise in Abstr. 6th Int. Congr. Pl. Prot., Vienna, 1967, S. 433 berichtet.

Es hat sich nun überraschenderweise gezeigt, dass eine mengenmässig in bestimmten Grenzen variable Kombination der beiden Wirkstoffklassen I und II eine synergistische Wirkung entfaltet, die die Mehrzahl aller wichtigen Unkräuter in Zucker- und Futterrübenkulturen zu bekämpfen vermag, ohne diese Kulturen zu schädigen. Es werden die Hauptunkräuter der Kulturen, wie Arten der Dikotyledonengattungen Amaranthus, Chenopodium und Sinapis sowie der Monokotyledonengattungen Panicum und Avena selektiv in den aufgelaufenen Zucker- und Futterrübenkulturen vernichtet.

Es ist überraschend, dass die Kombination eines Wirkstoffs der Formel I mit einem Wirkstoff der Formel II nicht nur eine prinzipiell

zu erwartende additive Ergänzung des Wirkungsspektrums auf die üblichen mit Zucker- und Futterrübenkulturen vergesellschafteten Unkräuter hervorruft, sondern dass sie einen synergistischen Effekt erzielt, der die Wirkungsgrenzen beider Präparate unter zwei Aspekten erweitert.

Einmal werden die Aufwandmengen der Einzelverbindungen I und II bei gleichbleibend guter Wirkung deutlich gesenkt. Zum anderen erzielt die kombinierte Mischung auch dort noch einen hohen Grad der Unkraut-Bekämpfung, wo beide Einzelverbindungen im Bereich allzu geringer Aufwandmengen völlig wirkungslos geworden sind. Dies hat eine wesentliche Verbreiterung des Unkrautspektrums und eine zusätzliche Erhöhung der Sicherheitsmarge auf Zuckerrübenkulturen zur Folge, wie sie für unbeabsichtigte Wirkstoffüberdosierung notwendig und erwünscht ist.

Das erfindungsgemässe Mittel kann auch zur selektiven Unkrautbekämpfung in anderen dikotylen Kulturen ähnlicher Wirkstoffempfindlichkeit mit ähnlichem Unkrautbestand eingesetzt werden.

Die erfindungsgemässe Wirkstoffkombination enthält einen Wirkstoff der Formel (I) und einen der Formel (II) in beliebigem Mischungsverhältnis, insbesondere im Verhältnis von 1:1 bis 1:4, vorzugsweise 1:1 bis 1:2.

Die erfindungsgemässe Wirkstoffkombination zeigt eine ausgezeichnete Wirkung gegen Unkräuter, ohne aber Futter- und Zuckerrübenkulturen in üblichen Aufwandmengen von 0,2 bis 4 kg, vorzugsweise 0,5 bis 3 g pro Hektar nennenswert zu beeinflussen.

Die vorliegende Erfindung betrifft auch die Verwendung des erfindungsgemässen Mittels, also ein Verfahren zur selektiven Ungras- und Unkrautbekämpfung in Zucker- und Futterrübenkulturen unter postemergenter Anwendung des Mittels.

Das erfindungsgemässe Mittel mit der neuen Wirkstoffkombination enthält neben den genannten Wirkstoffen noch geeignete Träger- und/oder andere Zuschlagstoffe. Diese können fest oder flüssig sein und entsprechen den in der Formulierungstechnik üblichen Stoffen wie z.B. natürlichen oder regenerierten mineralischen Stoffen, Lösungs-, Dispergier-, Netz-, Haft-, Verdickungs-, Bindemittel oder Düngemitteln. Geeignete Anwendungsformen sind daher z.B. Emulsionskonzentrate, direkt versprühbare oder verdünnbare Lösungen, verdünnte Emulsionen, Spritzpulver, lösliche Pulver, Stäubemittel, Granulate, auch Verkapselungen in z.B. polymeren Stoffen. Die Anwendungsverfahren wie Versprühen, Vernebeln, Verstäuben, Verstreuen oder Giessen werden gleich wie die Art der Mittel den angestrebten Zielen und den gegebenen Verhältnissen entsprechend gewählt.

Die Formulierungen, d.h. die den Wirkstoff der Formel I und gegebenenfalls einen festen oder flüssigen Zusatzstoff enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Aether und Ester, wie Aethanol, Aethylenglykol, Aethylenglykolmonomethyl- oder -äthyläther, Ketone wie Cyclohexanon, stark polare Lösungsmittel wie N-Methyl-2-pyrrolidon, Dimethylsulfoxid oder Dimethylformamid, sowie gegebenenfalls epoxidierte Pflanzenöle wie epoxidiertes Kokosnussöl oder Sojaöl; oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen als auch wasserlösliche synthetische oberflächenaktive Verbindungen sein.

Als Seifen seien die Alkali-, Erdalkali- oder gegebenenfalls substituierte Ammoniumsalze von höheren Fettsäuren ($C_{10}$-$C_{22}$), wie z.B. die Na- oder K-Salze der Oel- oder Stearinsäure, oder von natürlichen Fettsäuregemischen, die z.B. aus Kokosnuss- oder Talgöl gewonnen werden können, genannt. Ferner sind auch die Fettsäuremethyl-taurinsalze zu erwähnen.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze

vor und weisen einen Alkylrest mit 8 bis 22 C-Atomen auf, wobei Alkyl auch den Alkylteil von Acylresten einschliesst, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Aethylenoxid-Addukten. Die sulfonierten Benzimidazolderivate enthalten vorzugsweise 2-Sulfonsäuregruppen und einen Fettsäurerest mit 8-22 C-Atomen. Alkylarylsulfonate sind z.B. die Na-, Ca- oder Triäthanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eines p-Nonylphenol-(4-14)-Aethylenoxid-Adduktes in Frage.

Als nichtionische Tenside kommen in erster Linie Polyglykolätherderivaten von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 100 Propylenglykoläthergruppen enthaltenden Polyäthylenoxidaddukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Aethylenglykoleinheiten.

Als Beispiele nichtionischer Tenside seien Nonylphenolpolyäthoxyäthanole, Ricinusölpolyglykolähter, Polypropylen-Polyäthylenoxidaddukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensoribtan-trioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, z.B. das Stearyltrimethylammoniumchlorid oder das Benzyldi(2-chloräthyl)äthylammoniumbromid.

Die in der Formulierungstechnik gebräuchlichen Tenside sind u.a. in folgenden Publikationen beschrieben:

"Mc Cutcheon's Detergents and Emuslifiers Annual" MC Publishing Corp., Ringwood, New Jersey, 1979.
Sisely and Wood, "Encyclopedia of Surface Active Agents", Chemical Publishin Co., Inc. New York, 1964.

Der Wirkstoffgehalt in handelsfähigen Mitteln liegt zwischen 0,1 bis 95 Gewichtsprozent, vorzugsweise 1 bis 80 Gewichtsprozent.

Insbesondere setzen sich bevorzugte Formulierungen folgendermassen zusammen: (% = Gewichtsprozent)

<u>Lösungen</u>

| | | |
|---|---|---|
| Aktiver Wirkstoff: | 5 bis 95%, | vorzugsweise 10 bis 80% |
| Lösungsmittel: | 95 bis 5%, | vorzugsweise 90 bis 0% |
| oberflächenaktives Mittel: | 1 bis 30%, | vorzugsweise 2 bis 20%. |

Emulgierbare Konzentrate

| | | |
|---|---|---|
| Aktiver Wirkstoff: | 10 bis 50%, | bevorzugt 10 bis 40% |
| oberflächenaktives Mittel: | 5 bis 40%, | bevorzugt 10 bis 20% |
| flüssiges Trägermittel: | 20 bis 95%, | vorzugsweise 40 bis 80%. |

Stäube

| | | |
|---|---|---|
| Aktiver Wirkstoff: | 0,5 bis 10%, | vorzugsweise 2 bis 8% |
| festes Trägermittel: | 99,5 bis 90%, | vorzugsweise 98 bis 92%. |

Suspensions-Konzentrate

| | | |
|---|---|---|
| Aktiver Wirkstoff: | 5 bis 75%, | vorzugsweise 10 bis 50% |
| Wasser: | 94 bis 25%, | vorzugsweise 90 bis 30% |
| oberflächenaktives Mittel: | 1 bis 40%, | vorzugsweise 2 bis 30%. |

Benetzbare Pulver

| | | |
|---|---|---|
| Aktiver Wirkstoff: | 5 bis 90%, | vorzugsweise 10 bis 80% und insbesondere 20 bis 60% |
| oberflächenaktives Mittel: | 0,5 bis 20%, | vorzugsweise 1 bis 15% |
| festes Trägermittel: | 5 bis 90%, | vorzugsweise 30 bis 70%. |

Granulate

| | | |
|---|---|---|
| aktiver Wirkstoff: | 0,5 bis 30%, | vorzugsweise 3 bis 15% |
| festes Trägermittel: | 99,5 bis 70%, | vorzugsweise 97 bis 85%. |

Während als Handelsware eher konzentrierte Mittel bevorzugt werden, verwendet der Endverbraucher in der Regel verdünnte Mittel. Die Anwendungsformen können bis hinab zu 0,001% an Wirkstoff verdünnt werden.

Den beschriebenen erfindungsgemässen Mitteln lassen sich andere biozide Wirkstoffe oder Mittel beimischen. So können die neuen Mittel ausser den genannten Verbindungen der allgemeinen Formel I und der Formel II z.B. Insektizide, Fungizide, Bakterizide, Fungistatika, Bakteriostatika oder Nematizide zur Verbreiterung des Wirkungsspektrums enthalten.

Ein synergistischer Effekt liegt bei Herbiziden immer dann vor, wenn die herbizide Wirkung der Wirkstoffkombination I + II grösser ist als die Summe aus der Wirkung der einzeln applizierten Wirkstoffe.

Das zu erwartende Pflanzenwachstum E für eine gegebene Kombination zweier Herbizide kann (vgl. COLBY, S.R., "Calculating synergistic and antagonistic response of herbicide combinations". Weeds 15, Seiten 20-22, 1967) wie folgt berechnet werden:

$$E = \frac{X \cdot Y}{100}$$

Dabei bedeuten:

X = Prozent Wachstum (im Vergleich zu unbehandelten Pflanzen) bei Behandlung mit einem Herbizid I mit p kg Aufwandmenge pro Hektar,

Y = Prozent Wachstum bei Behandlung mit einem Herbizid II mit q kg Aufwandmenge pro Hektar,

E = Erwartetes Wachstum in Prozent zu den Kontrollpflanzen nach Behandlung mit Herbizidgemisch I + II bei einer Aufwandmenge von p + q kg Wirkstoffmenge pro Hektar.

Ist der tatsächlich beobachtete Wert niedriger als der zu erwartende Wert E, so liegt Synergismus vor.

Der synergistische Effekt der Kombinationen der Wirkstoffe I und II wird im ersten der folgenden Beispiele demonstriert.

Beispiel 1: Die Testpflanzen werden in Plastikcontainern, die 30 l sterilisierte Gartenerde enthalten, im Gewächshaus ausgesät. Nach dem Auflaufen werden die Pflanzen im 2- bis 3-Blattstadium mit einer wässerigen Dispersion der Wirkstoffkombination besprüht. Die Aufwandmenge an Dispersion beträgt 50 ml pro $m^2$. Nach 15 Tagen bei Temperaturen von 17-23°C, einer relativen Luftfeuchtigkeit von 60-70% und

täglicher Bewässerung der Container erfolgt die Auswertung.

Der Schädigungsgrad der Pflanzen wird linear nach folgendem Masstab bewertet:

1: Pflanzen gestorben

5: mittlere Wirkung

9: Normalzustand.

Für verschiedene Mischungsverhältnisse und Gesamtwirkstoffmengen werden folgende Ergebnisse erzielt:

a) <u>Tabelle 1</u>: Toleranz und Aktivität von 4-(3',5'-Dichlorpyridyl-2'-oxy)-α-phenoxypropionsäurepropargylester (Verb. Ia) und Metamitron (Verb. IIa) und deren Mischungen bei postemergenter Anwendung:

| Metamitron (Verb. IIa) kg AS/ha | 1.0 | | | 0.5 | | | 0.25 | | 0 | |
|---|---|---|---|---|---|---|---|---|---|---|
| Verbindung Ia kg AS/ha | 0 | 0.5 | 0.25 | 0 | 0.5 | 0.25 | 0 | 0.25 | 0.5 | 0.25 |
| Zuckerrübe 'Kawemono' | 9 | 9 | 9 | 9 | 9 | 9 | 9 | 9 | 9 | 9 |
| Futterrübe 'Corona' | 9 | 9 | 9 | 9 | 9 | 9 | 9 | 9 | 9 | 9 |
| Panicum crus-galli | 9 | 1 | 1 | 9 | 1 | 1 | 9 | 1 | 1 | 1 |
| Avena fatua | 2 | 1 | 1 | 9 | 1 | 1 | 9 | 1 | 1 | 1 |
| Amaranthus retroflexus | 2 | 1 | 1 | 6 | 1 | 1 | 9 | 3 | 9 | 9 |
| Chenopodium album | 6 | 1 | 1 | 9 | 2 | 2 | 9 | 3 | 9 | 9 |
| Sinapis arvensis | 9 | 4 | 3 | 9 | 9 | 9 | 9 | 9 | 9 | 9 |

Werden die nach der Methode Colby für additive Wirkung berechneten Werte mit den Resultaten aus Tabelle 1 verglichen, so erkennt man, dass die beobachteten Wachstumswerte bei Amaranthus retr., Chenopodium alb. und Sinapis arvensis kleiner sind, als die errechneten Wirkungen. Damit ist der synergistische Effekt der Mischung von 4-(3',5'-Dichlorpyridyl-2'-oxy)-α-phenoxypropionsäurepropargylester mit Metamitron bewiesen (vgl. Tabelle 2).

Tabelle 2: Nach Methode Colby errechnete Werte zum Nachweis des Synergismus zwischen 4-(3',5'-Dichlorpyridyl-2'-oxy)-α-phenoxy-propionsäurepropargylester (Verb. Ia) und Metamitron (Verb. IIa).

| Verb. IIa kg AS/ha | 1.0 | | | | 0.5 | | | | 0.25 | |
|---|---|---|---|---|---|---|---|---|---|---|
| Verb. Ia kg AS/ha | 0.5 | | 0.25 | | 0.5 | | 0.25 | | 0.25 | |
| | gemessener Wert | erwarteter Wert | gemessener Wert | erwarteter Wert | gemessener Wert | erwarteter Wert | gemessener Wert | erwarteter Wert | gemessener Wert | erwarteter Wert |
| Zuckerrübe 'Kawemono' | 100 | 100 | 100 | 100 | 100 | 100 | 100 | 100 | 100 | 100 |
| Futterrübe 'Corona' | 100 | 100 | 100 | 100 | 100 | 100 | 100 | 100 | 100 | 100 |
| Panicum c.g. | 1 | 1 | 1 | 1 | 1 | 1 | 1 | 1 | 1 | 1 |
| Avena fatua | 1 | 1 | 1 | 1 | 1 | 1 | 1 | 1 | 1 | 1 |
| Amaranthus retr. | 1 | 12 | 1 | 12 | 1 | 62 | 1 | 62 | 25 | 100 |
| Chenopodium alb. | 1 | 62 | 1 | 62 | 12 | 100 | 12 | 100 | 25 | 100 |
| Sinapis arvensis | 37 | 100 | 25 | 100 | 100 | 100 | 100 | 100 | 100 | 100 |

b) Tabelle 3: Toleranz und Aktivität von 4-(3',5'-Dichlorpyridyl-2'-oxy)-α-phenoxy-propionsäurepropargylester (Verb. Ia) und Phenmedipham (Verb. IIb) und deren Mischungen bei postemergenter Anwendung.

| Phenmedipham(Verb.IIb) kg AS/ha | 1.0 | | | 0.5 | | | 0.25 | | 0 | |
|---|---|---|---|---|---|---|---|---|---|---|
| Verbindung Ia kg AS/ha | 0 | 0.5 | 0.25 | 0 | 0.5 | 0.25 | 0 | 0.25 | 0.5 | 0.25 |
| Zuckerrübe 'Kawemono' | 9 | 9 | 9 | 9 | 9 | 9 | 9 | 9 | 9 | 9 |
| Futterrübe 'Corona' | 9 | 9 | 9 | 9 | 9 | 9 | 9 | 9 | 9 | 9 |
| Panicum crus-galli | 2 | 1 | 1 | 3 | 1 | 1 | 8 | 1 | 1 | 1 |
| Avena fatua | 9 | 1 | 1 | 9 | 1 | 1 | 9 | 1 | 1 | 1 |
| Amaranthus retroflexus | 9 | 6 | 6 | 9 | 7 | 9 | 9 | 9 | 9 | 9 |
| Chenopodium album | 3 | 3 | 3 | 4 | 3 | 3 | 9 | 3 | 9 | 9 |
| Sinapis arvensis | 2 | 2 | 1 | 7 | 2 | 4 | 9 | 7 | 9 | 9 |

Werden die nach Colby für additive Wirkung berechneten Werte mit den Resultaten aus Tabelle 3 verglichen, so erkennt man, dass die Wachstumswerte bei Amaranthus retr., Chenopodium alb. und Sinapis arvensis kleiner sind, als die errechneten Wirkungen. Damit ist der synergistische Effekt der Mischung von 4-(3',5'-Dichlorpyridyl-2'-oxy)-α-phenoxy-propionsäurepropargylester mit Phenmedipham bewiesen (vgl. Tabelle 4).

Tabelle 4: Nach Methode Colby errechnete Werte zum Nachweis des Synergismus zwischen 4-(3',5'-Dichlorpyridyl-2'-oxy)-α-phenoxy-propionsäurepropargylester (Verb. Ia) und Phenmedipham (Verb. IIb)

| Verb. IIb kg AS/ha | 1.0 | | | | 0.5 | | | | 0.25 | |
|---|---|---|---|---|---|---|---|---|---|---|
| Verb. Ia kg AS/ha | 0.5 | | 0.25 | | 0.5 | | 0.25 | | 0.25 | |
| | gemessener Wert | erwarteter Wert | gemessener Wert | erwarteter Wert | gemessener Wert | erwarteter Wert | gemessener Wert | erwarteter Wert | gemessener Wert | erwarteter Wert |
| Zuckerrübe 'Kawemono' | 100 | 100 | 100 | 100 | 100 | 100 | 100 | 100 | 100 | 100 |
| Futterrübe 'Corona' | 100 | 100 | 100 | 100 | 100 | 100 | 100 | 100 | 100 | 100 |
| Panicum c.g. | 1 | 1 | 1 | 1 | 1 | 1 | 1 | 1 | 1 | 1 |
| Avena fatua | 1 | 1 | 1 | 1 | 1 | 1 | 1 | 1 | 1 | 1 |
| Amaranthus retr. | 62 | 100 | 62 | 100 | 75 | 100 | 100 | 100 | 100 | 100 |
| Chenopodium alb. | 25 | 25 | 12 | 25 | 25 | 37 | 25 | 37 | 25 | 100 |
| Sinapis arvensis | 12 | 12 | 1 | 12 | 12 | 75 | 37 | 75 | 75 | 100 |

c) <u>Tabelle 5:</u> Toleranz und Aktivität von 4-(3',5'-Dichlorpyridyl-2'-oxy)-α-phenoxy-propionthiolsäurepropargylester (Verb.Ib) und Metamitron (Verb. IIa) und deren Mischungen bei postemergenter Anwendung

| Metamitron (Verb. IIa) kg AS/ha | 1.0 | | | 0.5 | | | 0.25 | | 0 | |
|---|---|---|---|---|---|---|---|---|---|---|
| Verbindung Ib kg AS/ha | 0 | 0.5 | 0.25 | 0 | 0.5 | 0.25 | 0 | 0.25 | 0.5 | 0.25 |
| Zuckerrübe 'Kawemono' | 9 | 9 | 9 | 9 | 9 | 9 | 9 | 9 | 9 | 9 |
| Futterrübe 'Corona' | 9 | 9 | 9 | 9 | 9 | 9 | 9 | 9 | 9 | 9 |
| Panicum crus-galli | 9 | 1 | 1 | 9 | 1 | 1 | 9 | 1 | 1 | 1 |
| Avena fatua | 2 | 1 | 1 | 9 | 1 | 1 | 9 | 1 | 1 | 1 |
| Amaranthus retroflexus | 2 | 1 | 1 | 6 | 1 | 2 | 9 | 2 | 9 | 9 |
| Chenopodium album | 6 | 1 | 1 | 9 | 1 | 2 | 9 | 2 | 9 | 9 |
| Sinapis arvensis | 9 | 4 | 8 | 9 | 8 | 7 | 9 | 9 | 9 | 9 |

Werden die nach Colby für additive Wirkung berechneten Werte mit den Resultaten aus Tabelle 5 verglichen, so erkennt man, dass die Wachstumswerte bei Amaranthus retr., Chenopodium alb. und Sinapis arvensis kleiner sind, als die errechneten Wirkungen. Damit ist der synergistische Effekt der Mischung von 4-(3',5'-Dichlorpyridyl-2'-oxy)-α-phenoxy-propionthiolsäurepropargylester mit Metamitron bewiesen (vgl. Tabelle 6).

Tabelle 6: Nach Methode Colby errechnete Werte zum Nachweis des Synergismus zwischen 4-(3',5'-Dichlorpyridyl-2'-oxy)-α-phenoxy-propionthiolsäurepropargylester (Verb. Ib) und Metamitron (Verb. IIa).

| Verb. IIa kg AS/ha | 1.0 | | | | 0.5 | | | | 0.25 | |
|---|---|---|---|---|---|---|---|---|---|---|
| Verb. Ib kg AS/ha | 0.5 | | 0.25 | | 0.5 | | 0.25 | | 0.25 | |
| | gemessener Wert | erwarteter Wert | gemessener Wert | erwarteter Wert | gemessener Wert | erwarteter Wert | gemessener Wert | erwarteter Wert | gemessener Wert | erwarteter Wert |
| Zuckerrübe 'Kawemono' | 100 | 100 | 100 | 100 | 100 | 100 | 100 | 100 | 100 | 100 |
| Futterrübe 'Corona' | 100 | 100 | 100 | 100 | 100 | 100 | 100 | 100 | 100 | 100 |
| Panicum c.g. | 1 | 1 | 1 | 1 | 1 | 1 | 1 | 1 | 1 | 1 |
| Avena fatua | 1 | 1 | 1 | 1 | 1 | 1 | 1 | 1 | 1 | 1 |
| Amaranthus retr. | 1 | 12 | 1 | 12 | 1 | 62 | 12 | 62 | 12 | 100 |
| Chenopodium alb. | 1 | 62 | 1 | 62 | 1 | 100 | 12 | 100 | 12 | 100 |
| Sinapis arvensis | 37 | 100 | 87 | 100 | 87 | 100 | 75 | 100 | 100 | 100 |

d) Tabelle 7: Toleranz und Aktivität von 4-(3',5'-Dichlorpyridyl-2'-oxy)-α-phenoxy-propionthiolsäurepropargylester (Verb. Ib) und Phenmedipham (Verb. IIb) und deren Mischungen bei postemergenter Anwendung.

| Phenmedipham (Verb. IIb) kg AS/ha | 1.0 | | | 0.5 | | | 0.25 | | 0 | |
|---|---|---|---|---|---|---|---|---|---|---|
| Verbindung Ib kg AS/ha | 0 | 0.5 | 0.25 | 0 | 0.5 | 0.25 | 0 | 0.25 | 0.5 | 0.25 |
| Zuckerrübe 'Kawemono' | 9 | 9 | 9 | 9 | 9 | 9 | 9 | 9 | 9 | 9 |
| Futterrübe 'Corona' | 9 | 9 | 9 | 9 | 9 | 9 | 9 | 9 | 9 | 9 |
| Panicum crus-galli | 2 | 1 | 1 | 3 | 1 | 1 | 8 | 1 | 1 | 1 |
| Avena fatua | 9 | 1 | 1 | 9 | 1 | 1 | 9 | 1 | 1 | 1 |
| Amaranthus retroflexus | 9 | 7 | 8 | 9 | 7 | 9 | 9 | | 9 | 9 |
| Chenopodium album | 3 | 2 | 2 | 4 | 2 | 2 | 9 | | 9 | 9 |
| Sinapis arvensis | 2 | 2 | 2 | 7 | 3 | 4 | 9 | | 9 | 9 |

Werden die nach Colby für additive Wirkung berechneten Werte mit den Resultaten aus Tabelle 7 verglichen, so erkennt man, dass die Wachstumswerte bei Amaranthus retr., Chenopodium alb. und Sinapis arvensis kleiner sind, als die errechneten Wirkungen. Damit ist der synergistische Effekt der Mischung von 4-(3',5'-Dichlorpyridyl-2'-oxy)-α-phenoxy-propionthiolsäurepropargylester mit Phenmedipham bewiesen (vgl. Tabelle 8).

Tabelle 8: Nach Methode Colby errechnete Werte zum Nachweis des Synergismus zwischen 4-(3'.5'-Dichlorpyridyl-2'-oxy)-α-phenoxy-propionthiolsäurepropargylester (Verb. Ib) und Phenmedipham (Verb. IIb).

| Verb. IIb kg AS/ha | 1.0 | | | | 0.5 | | | | 0.25 | |
|---|---|---|---|---|---|---|---|---|---|---|
| Verb. I b kg AS/ha | 0.5 | | 0.25 | | 0.5 | | 0.25 | | 0.25 | |
| | gemessener Wert | erwarteter Wert | gemessener Wert | erwarteter Wert | gemessener Wert | erwarteter Wert | gemessener Wert | erwarteter Wert | gemessener Wert | erwarteter Wert |
| Zuckerrübe 'Kawemono' | 100 | 100 | 100 | 100 | 100 | 100 | 100 | 100 | 100 | 100 |
| Futterrübe 'Corona' | 100 | 100 | 100 | 100 | 100 | 100 | 100 | 100 | 100 | 100 |
| Panicum c.g. | 1 | 1 | 1 | 1 | 1 | 1 | 1 | 1 | 1 | 1 |
| Avena fatua | 1 | 1 | 1 | 1 | 1 | 1 | 1 | 1 | 1 | 1 |
| Amaranthus retr. | 75 | 100 | 87 | 100 | 75 | 100 | 100 | 100 | 100 | 100 |
| Chenopodium alb. | 12 | 25 | 12 | 25 | 12 | 37 | 25 | 37 | 37 | 100 |
| Sinapis arvensis | 12 | 12 | 12 | 12 | 25 | 75 | 37 | 75 | 100 | 100 |

Formulierungsbeispiele

Beispiel 2:

Formulierungsbeispiele für synergistische Wirkstoffgemische der Formeln I und II (% =Gewichtsprozent)

| a) Spritzpulver | a) | b) | c) | d) |
|---|---|---|---|---|
| Wirkstoff Ia oder Ib | 10% | 20% | 5% | 30% |
| Wirkstoff IIa oder IIb | 10% | 40% | 15% | 30% |
| Na-Ligninsulfonat | 5% | 5% | 5% | 5% |
| Na-Laurylsulfat | 3% | - | 3% | - |
| Na-Diisobutylnaphthalinsulfonat | - | 6% | - | 6% |
| Octylphenolpolyäthylenglykoläther 7-8 Mol AeO) | - | 2% | - | 2% |
| Hochdisperse Kieselsäure | 5% | 27% | 5% | 27% |
| Kaolin | 67% | - | 67% | - |

Das Wirkstoffgemisch wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| b) Emulsions-Konzentrat | a) | b) | c) |
|---|---|---|---|
| Wirkstoff Ia oder Ib | 5% | 5% | 12% |
| Wirkstoff IIa oder IIb | 5% | 20% | 13% |
| Octylphenolpolyäthylenglykoläther (4-5 Mol AeO) | 3% | 3% | 3% |
| Ca-Dodecylbenzolsulfonat | 3% | 3% | 2% |
| Ricinusölpolyglykoläther (36 Mol AeO) | 4% | 4% | 4% |
| Cyclohexanon | 30% | 30% | 31% |
| Xylolgemisch | 50% | 35% | 35% |

Aus diesen Konzentraten können durch Verdünnen mit Wasser Emulsionen jeden gewünschten Konzentration hergestellt werden.

| c) Stäubemittel | a) | b) | c) | d) |
|---|---|---|---|---|
| Wirkstoff Ia oder Ib | 2% | 4% | 2% | 4% |
| Wirkstoff IIa oder IIb | 3% | 4% | 4% | 8% |
| Talkum | 95% | - | 94% | - |
| Kaolin | - | 92% | - | 88% |

Man erhält anwendungsfertige Stäubemittel, indem das Wirkstoffgemisch mit dem Träger vermischt und auf einer geeigneten Mühle vermahlen wird.

| d) Extruder Granulat | a) | b) | c) |
|---|---|---|---|
| Wirkstoff Ia oder Ib | 5% | 3% | 5% |
| Wirkstoff IIa oder IIb | 5% | 7% | 15% |
| Na-Ligninsulfonat | 2% | 2% | 2% |
| Carboxymethylcellulose | 1% | 1% | 1% |
| Kaolin | 87% | 87% | 77% |

Das Wirkstoffgemisch wird mit den Zusatzstoffen vermischt, vermahlen und mit Wasser angefeuchtet. Dieses Gemisch wird extrudiert und anschliessend im Luftstrom getrocknet.

| e) Umhüllungs-Granulat | a) | b) |
|---|---|---|
| Wirkstoff Ia oder Ib | 1,5% | 3% |
| Wirkstoff IIa oder IIb | 1,5% | 5% |
| Polyäthylenglykol (MG 200) | 3% | 3% |
| Kaolin | 94% | 89% |

Das fein gemahlene Wirkstoffgemisch wird in einem Mischer auf das mit Polyäthylenglykol angefeuchtete Kaolin gleichmässig aufgetragen. Auf diese Weise erhält man staubfreie Umhüllungs-Granulate.

| f) Suspensions-Konzentrat | a) | b) |
|---|---|---|
| Wirkstoff Ia oder Ib | 20% | 20% |
| Wirkstoff IIa oder IIb | 20% | 40% |
| Aethylenglykol | 10% | 10% |
| Nonylphenolpolyäthylenglykoläther (15 Mol AeO) | 6% | 6% |
| Na-Ligninsulfonat | 10% | 10% |
| Carboxymethylcellulose | 1% | 1% |
| 37%ige wässrige Formaldehyd-Lösung | 0,2% | 0,2% |
| Silikonöl in Form einer 75%igen wässrigen Emulsion | 0,8% | 0,8% |
| Wasser | 32% | 12% |

Das fein gemahlene Wirkstoffgemisch wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

Patentansprüche

1. Synergistisches Mittel zur selektiven Umkrautbekämpfung, dadurch gekennzeichnet, dass es neben Träger- und/oder anderen Zuschlagstoffen als wirksame Komponente einerseits einen 4-(3',5'-Dichlorpyridyl-2'-oxy)-α-phenoxy-propionsäurepropargylester der Formel I

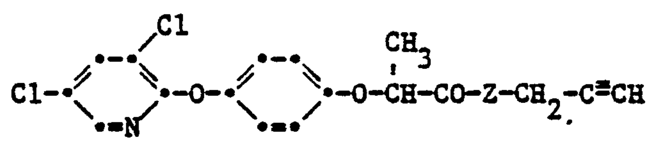

, (I)

worin Z Sauerstoff oder Schwefel bedeutet, und andererseits 4-Amino-3-methyl-6-phenyl-[4H]-1,2,4-triazin-5-on (IIa) oder Methyl-3-m-tolylcarbamoyloxyphenylcarbamat (IIb) enthält.

2. Mittel gemäss Patentanspruch 1, dadurch gekennzeichnet, dass im genannten Mittel die Komponente (II) gegenüber der Komponente (I) in etwa gleichem Gewichtsverhältnis oder im Ueberschuss vorhanden ist.

3. Mittel gemäss Patentanspruch 2, dadurch gekennzeichnet, dass das Gewichtsverhältnis zwischen Komponente (I) und Komponente (II) 1:1 bis 1:4, vorzugsweise 1:1 bis 1:2, beträgt.

4. Verfahren zur selektiven Unkrautbekämpfung in Zucker- und Futterrübenkulturen, dadurch gekennzeichnet, dass man verunkrautete Zucker- oder Futterrübenkulturen postemergent mit einer wirksamen Menge eines Mittels gemäss Patentanspruch 1 behandelt.

5. Verfahren gemäss Patentanspruch 4, dadurch gekennzeichnet, dass man Zucker- und Futterrübenkulturen, welche als Unkräuter Dikotyledonen der Gattung Chenopodium, Amaranthus und Sinapis und Monokotyledonen-Ungräser der Gattung Panicum und Avena enthalten,

mit dem genannten Mittel behandelt.

6. Verfahren gemäss Ansprüchen 4 und 5, dadurch gekennzeichnet, dass man die Zucker- und Futterrübenkultur mit dem genannten Mittel in Aufwandmengen behandelt, die 0,2 bis 4 kg, vorzugsweise 0,5 bis 3 kg, Totalwirkstoffe pro Hektar entsprechen.

7. Verwendung einer wirksamen Menge eines Mittels gemäss Patentanspruch 1 zur postemergenten Unkrautbekämpfung in Zucker- und Futterrübenkulturen.

0043800

Europäisches Patentamt

# EUROPÄISCHER RECHERCHENBERICHT

Nummer der Anmeldung
EP 81 81 0268

| EINSCHLÄGIGE DOKUMENTE | | | KLASSIFIKATION DER ANMELDUNG (Int. Cl.3) |
|---|---|---|---|
| Kategorie | Kennzeichnung des Dokuments mit Angabe, soweit erforderlich, der maßgeblichen Teile | betrifft Anspruch | |
| | EP - A - 0 004 414 (I.C.I.)<br>* Patentansprüche; Seite 5, Zeile 12; Seite 7, Zeile 20; Seite 11 *<br>------ | 1-7 | A 01 N 47/22<br>43/64<br>//(A 01 N 47/22<br>43/40)<br>(A 01 N 43/64<br>43/40) |

RECHERCHIERTE SACHGEBIETE (Int. Cl.3)

A 01 N 47/22
43/64
43/40

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 02-10-1981 | DECORTE |

EPA form 1503.1 06.78